# EUROPÄISCHE PATENTANMELDUNG

(11) **EP 4 292 972 A1**
(43) Veröffentlichungstag der Anmeldung: **20.12.2023**
(21) Anmeldenummer: 23176582.7
(22) Anmeldetag: 01.06.2023
(51) Int. Cl.: B66C 23/52, B66C 13/12, B63B 27/10, F03D 9/32, F03D 9/43

(54) **KRAN FÜR EIN SCHIFF SOWIE SCHIFF MIT EINEM SOLCHEN**

(30) Priorität: 14.06.2022 DE 202022103336 U
(71) Anmelder: Liebherr-MCCtec Rostock GmbH, 18147 Rostock (DE)
(72) Erfinder: Wilhelm, Thomas, 18109 Rostock (DE); Giese, Jan, 18147 Rostock (DE); Moschell, Torsten, 15295 Groß Lindow (DE); Pfabe, Mathias, 18059 Papendorf (DE)
(74) Vertreter: Laufhütte, Dieter

(57) **Zusammenfassung**

Die Erfindung betrifft einen Kran für ein Schiff umfassend eine mit einem Schiff verbindbare Tragstruktur, welche ein Hebezeug trägt, mit einer Antriebs- und/oder Energiequelle, mittels welcher eine Antriebskraft für das Schiff und/oder Energie zur Versorgung eines Verbrauchers des Schiffes erzeugbar ist und welche derart mit der Tragstruktur verbunden ist, dass mittels des Hebezeugs unabhängig von der Antriebs- und/oder Energiequelle eine Last bewegbar ist.

## Beschreibung

Die vorliegende Erfindung betrifft einen Kran nach dem Oberbegriff des Anspruchs 1 sowie ein Schiff mit einem solchen Kran.

Krane werden nicht nur an Land, sondern auch auf Wasserfahrzeugen wie beispielsweise auf Kranschiffen bzw. Schwimmkranen oder schwimmenden Plattformen eingesetzt. Im Folgenden wird für Wasserfahrzeuge jeglicher Art im Zusammenhang mit der vorliegenden Erfindung schlicht von Schiffen gesprochen, wobei hierbei auch andere schwimmfähige Objekte wie schwimmende Plattformen, Bohrinseln oder dergleichen umfasst sind.

Sollen derartige Schiffe mit zusätzlichen Antriebseinrichtungen oder Energiequellen wie beispielsweise Windkraftanlagen oder Windantriebsanlagen ausgestattet werden, musste hierfür bisher ein definierter Aufbauort am Schiff bereitgestellt werden. Es bedurfte eines separaten Stellplatzes oder eines zusätzlichen Fundaments, welches als Basis für die zusätzliche Antriebseinrichtung oder Energiequelle errichtet werden musste. Nachteilhaft daran ist, dass der durch die zusätzliche Antriebseinrichtung oder Energiequelle eingenommene Platz somit nicht mehr für das Stauen von Ladung oder für andere Schiffskomponenten benutzt werden konnte und/oder ggf. zu logistischen Hindernissen im Ladungstransport und Ladungsumschlag führte.

Der vorliegenden Erfindung liegt daher die Aufgabe zugrunde, eine zusätzliche Antriebseinrichtung oder Energiequelle derart an einem Kran anzuordnen, dass sich insgesamt eine optimale Ausnutzung des zur Verfügung stehenden Platzes ergibt.

Erfindungsgemäß wird diese Aufgabe durch einen Kran mit den Merkmalen des Anspruchs 1 sowie durch ein Schiff mit den Merkmalen des Anspruchs 15 gelöst. Vorteilhafte Ausführungsformen der Erfindung ergeben sich aus den Unteransprüchen und der nachfolgenden Beschreibung.

Demnach wird einerseits ein Kran für ein Schiff vorgeschlagen, welcher eine mit einem Schiff verbindbare Tragstruktur umfasst, wobei die Tragstruktur ein Hebezeug (d.h. eine Einrichtung zum Heben und Bewegen einer Last und somit gewissermaßen den Kran im engeren Sinne) trägt. Die Tragstruktur kann dabei z.B. einen Mast, eine Grundsäule oder ein Portal darstellen bzw. umfassen und bildet bzw. umfasst das Fundament für das Hebezeug.

Erfindungsgemäß umfasst der Kran eine Antriebs- und/oder Energiequelle, mittels welcher eine Antriebskraft für das Schiff und/oder Energie zur Versorgung eines Verbrauchers des Schiffes erzeugbar ist. Bei der Antriebskraft kann es sich insbesondere um eine Vortriebskraft handeln. Es kann sich um eine zusätzlich zu einer oder mehreren primären Antriebseinrichtungen des Schiffes vorgesehene Antriebsquelle handeln. Im Falle einer Energiequelle handelt es sich insbesondere um eine regenerative Energiequelle.

Erfindungsgemäß ist die Antriebs- und/oder Energiequelle derart mit der Tragstruktur des Krans verbunden, dass mittels des Hebezeugs unabhängig von der Antriebs- und/oder Energiequelle eine Last bewegbar ist. Die Antriebs- und/oder Energiequelle ist also mit dem Kran verbunden und wird von dessen Tragstruktur getragen. Dadurch entfällt die Notwendigkeit, einen separaten Aufbauort am Schiff für die Antriebs- und/oder Energiequelle vorzusehen und diese auf einem eigenen Fundament zu platzieren. Stattdessen übernimmt der Kran die Trägerfunktion für die Aufnahme der Antriebs- und/oder Energiequelle. Die Tragstruktur des Krans fungiert gleichermaßen als Fundament für das Hebezeug und für die Antriebs- und/oder Energiequelle.

Dabei wird Antriebs- und/oder Energiequelle derart am Kran angeordnet, dass dessen Funktionalität nicht beeinträchtigt wird. Die Antriebs- und/oder Energiequelle wird also beispielsweise nicht einfach anstelle einer Last von einem Ausleger oder einem Lasthaken des Hebezeugs getragen, wodurch der Kran keine Lasten mehr bewegen könnte, sondern das Hebezeug bzw. die eigentliche Kranfunktion kann weiterhin und unabhängig von der Antriebs- und/oder Energiequelle genutzt werden.

In einer möglichen Ausführungsform ist vorgesehen, dass der Kran als Portalkran ausgebildet ist, wobei die Tragstruktur mit dem Schiff verbindbare Schienen sowie ein entlang der Schienen verfahrbares Traggestell mit einer Brücke umfasst. Die Brücke und das übrige auf den Schienen verfahrbare Traggestell bilden das Portal, welches beispielsweise eine Fracht bzw. einen Frachtraum überspannt. Das Hebezeug und die Antriebs- und/oder Energiequelle sind mit der Brücke verbunden bzw. an dieser angeordnet.

In einer weiteren möglichen Ausführungsform ist vorgesehen, dass das Hebezeug eine entlang der Brücke verfahrbare Laufkatze umfasst, welche an einer Unterseite der Brücke angeordnet ist. Die Laufkatze kann eine oder mehrere Umlenkrollen für ein Hubseil oder direkt das Hubwerk umfassen. Die Antriebs- und/oder Energiequelle ist vorzugsweise an einer Oberseite der Brücke angeordnet. Dadurch kann sich die Laufkatze unabhängig von der Antriebs- und/oder Energiequelle entlang der Brücke bewegen, während die Brücke als Träger für die Antriebs- und/oder Energiequelle dient. Alternativ kann die Antriebs- und/oder Energiequelle seitlich an der Brücke oder an einem der seitlichen Träger, zwischen denen sich die Brücke erstreckt, angeordnet sein.

In einer weiteren möglichen Ausführungsform ist vorgesehen, dass die Antriebs- und/oder Energiequelle über eine erste Dreheinheit mit der Brücke verbunden und mittels der ersten Dreheinheit um eine vertikale Drehachse drehbar ist. Dadurch lässt sich die Antriebs- und/oder Energiequelle relativ zur Tragstruktur bzw. zur Brücke und relativ zum Hebezeug drehen, beispielsweise um diese nach den aktuell vorherrschenden Windverhältnissen auszurichten.

In einer weiteren möglichen Ausführungsform ist vorgesehen, dass der Kran als Auslegerdrehkran ausgebildet ist, wobei die Tragstruktur eine mit dem Schiff verbindbare Grundsäule und das Hebezeug einen unabhängig von der Antriebs- und/oder Energiequelle bewegbaren Ausleger umfasst. Die Grundsäule ist insbesondere starr ausgebildet. Anstelle einer Grundsäule kann auch ein Gittermast zum Einsatz kommen. Der Ausleger umfasst vorzugsweise eine oder mehrere Umlenkrollen für ein Hubseil zum Heben und Bewegen einer Last.

Der Ausleger ist vorzugsweise um eine horizontale Achse schwenkbar gelagert und kann vorzugsweise mittels eines Aktuators, beispielsweise einem oder mehreren Hydraulikzylindern oder einem Seilzugsystem bzw. einer längenverstellbaren Abspannung, auf- und abgewippt werden. Alternativ kann auch ein Ausleger vorgesehen sein, der nicht wippbar gelagert ist, sondern nur um eine vertikale Achse drehbar ist, z.B. wie bei einem landgebundenen Turmdrehkran.

In einer weiteren möglichen Ausführungsform ist vorgesehen, dass eine erste Dreheinheit mit der Grundsäule verbunden ist, mittels welcher der Ausleger um eine vertikale Drehachse drehbar ist. Die erste Dreheinheit umfasst insbesondere ein Drehwerk mit Drehkranz. Die erste Dreheinheit kann direkt auf der Grundsäule oder auf einem mit der Grundsäule verbundenen Zwischenstück wie beispielsweise einem Exzenterarm angeordnet sein (in diesem Fall ist die erste Dreheinheit mittelbar bzw. indirekt mit der Grundsäule verbunden). Bevorzugt lässt sich ein solcher Exzenterarm aber mittels der ersten Dreheinheit drehen, wobei weitere Dreheinheiten auf dem Exzenterarm vorgesehen sein können. Damit lassen sich idealerweise die Antriebs- und/oder Energiequelle und der Ausleger gemeinsam bewegen, wobei bevorzugt die Antriebs- und/oder Energiequelle und der Ausleger nochmals unabhängig voneinander um eine (oder dieselbe) Drehachse drehbar sind. Dadurch lässt sich die Position der Antriebs- und/oder Energiequelle an die Stellung des Auslegers bzw. des Hebezeugs anpassen, sodass sich diese nicht im Weg stehen bzw. Kollisionen vermieden werden.

In einer weiteren möglichen Ausführungsform ist vorgesehen, dass der Ausleger und die Antriebs- und/oder Energiequelle mittels der ersten Dreheinheit gemeinsam um eine vertikale Drehachse drehbar sind, wobei vorzugsweise zumindest eine zweite Dreheinheit vorgesehen ist, mittels welcher der Ausleger unabhängig von der Antriebs- und/oder Energiequelle oder umgekehrt die Antriebs- und/oder Energiequelle unabhängig vom Ausleger um eine vertikale Drehachse drehbar ist. Die vertikale Drehachse der ersten und zweiten Dreheinheiten können kollinear (d.h. die beiden Dreheinheiten sind übereinander angeordnet) oder versetzt zueinander angeordnet sein. Es kann auch sowohl die Antriebs- und/oder Energiequelle als auch der Ausleger jeweils über eine eigene Dreheinheit drehbar sein, wodurch eine hohe Zahl von Freiheitsgraden zur Verfügung steht und die Positionen bzw. Ausrichtungen der verschiedenen Komponenten des Krans flexibel einstellbar sind.

Gerade im Falle einer windbasierten Antriebs- und/oder Energiequelle wie beispielsweise einer Windkraftanlage, eines Segels oder eines Windflügels kommt der unabhängig möglichen Drehung der Antriebs- und/oder Energiequelle eine besondere Bedeutung zu, da für eine optimale Antriebs- bzw. Energieerzeugung eine korrekte Ausrichtung abhängig von Position bzw. Stellung des Schiffs und den aktuellen Windverhältnissen erforderlich ist. Daher ist die Antriebs- und/oder Energiequelle bevorzugt neben der ersten Dreheinheit über eine weitere Dreheinheit unabhängig von der übrigen Kranstruktur und insbesondere vom Ausleger drehbar bzw. ausrichtbar.

In einer weiteren möglichen Ausführungsform ist vorgesehen, dass die Grundsäule mit einem Exzenterarm verbunden ist, welcher den Ausleger und/oder die Antriebs- und/oder Energiequelle trägt. Der Exzenterarm sorgt dafür, dass die Antriebs- und/oder Energiequelle und/oder der Ausleger seitlich versetzt zur vertikalen Drehachse der ersten Dreheinheit angeordnet ist, d.h. stets einen gewissen Abstand zu dieser Drehachse aufweist. Der Exzenterarm ist vorzugsweise mittels der ersten Dreheinheit drehbar, d.h. direkt oder indirekt mit der ersten Dreheinheit verbunden. Der Exzenterarm kann unmittelbar oberhalb der ersten Dreheinheit angeordnet sein. Vorzugsweise ist mindestens eine zweite Dreheinheit zum Drehen des Auslegers oder der Antriebs- und/oder Energiequelle am Exzenterarm angeordnet. Der Exzenterarm kann einseitig oder zu beiden Seiten von der Grundsäule abstehen.

In einer weiteren möglichen Ausführungsform ist vorgesehen, dass der Kran mindestens eine Schnittstelle umfasst, an die eine hydraulische und/oder eine elektrische und/oder eine pneumatische Leitung der Antriebs- und/oder Energiequelle anschließbar oder angeschlossen ist. Über die mindestens eine Schnittstelle ist vorzugsweise hydraulische und/oder elektrische und/oder pneumatische Energie zwischen der Antriebs- und/oder Energiequelle und dem Schiff übertragbar. Die Antriebs- und/oder Energiequelle wird also über die Kranschnittstelle mit Energie versorgt und/oder durch die Antriebs- und/oder Energiequelle erzeugte Energie wird über die Kranschnittstelle an das Schiff und die jeweiligen Speicher bzw. Verbraucher geleitet. Somit muss für die Antriebs- und/oder Energiequelle keine eigene Schnittstelle bzw. Versorgungsinfrastruktur vorgesehen sein, sondern die Anbindung erfolgt über den Kran, welcher wiederum an das elektrische und/oder hydraulische und/oder pneumatische System des Schiffs angebunden ist. Die jeweiligen Dreheinheiten des Krans weisen hierzu insbesondere entsprechende Drehdurchführungen und/oder Schleifringkörper auf. Neben oder alternativ zu einer Schnittstelle für elektrische Energie, Hydraulik und/oder Luft können auch Schnittstellen für andere Medien vorgesehen sein, beispielsweise für Wasserstoff, Treibstoff etc. Anschlüsse können z.B. für Rohrleitungen, Kabel und/oder mechanische Komponenten vorgesehen sein.

In einer weiteren möglichen Ausführungsform ist vorgesehen, dass die Antriebs- und/oder Energiequelle lösbar mit der Tragstruktur verbunden ist, d.h. die Antriebs- und/oder Energiequelle kann von der Tragstruktur bzw. vom Kran abgenommen werden. Die Tragstruktur und die Antriebs- und/oder Energiequelle verfügen hierzu jeweils über Verbindungsmittel zur Herstellung einer lösbaren Verbindung. Über die Verbindungsmittel kann die Antriebs- und/oder Energiequelle mit der Tragstruktur verbunden werden, wobei auch Verbindungsmittel in Form einer Einhängeverbindung oder gar einer bloßen Ablage denkbar sind. Dies setzt voraus, dass die Verbindungsmittel so ausgebildet sind, dass die Antriebs- und/oder Energiequelle sicher und stabil mit der Tragstruktur verbindbar ist und kein Herabfallen bzw. Verrutschen während des Betriebs des Krans erfolgen kann.

In einer weiteren möglichen Ausführungsform ist vorgesehen, dass die Antriebs- und/oder Energiequelle eine regenerative Energiequelle ist, insbesondere eine Solaranlage und/oder eine Windkraftanlage. Bevorzugt ist eine aktive Sonnen- und/oder Windnachführungseinrichtung vorgesehen, welche die Energiequelle automatisch in Abhängigkeit der Position und Ausrichtung des Schiffs nach dem aktuellen Sonnenstand und/oder nach den derzeitigen Windverhältnissen ausrichtet, um die Effizienz der Energieerzeugung zu optimieren. Die Nachführungseinrichtung kann mit einer oder mehreren Dreheinheiten des Krans gekoppelt sein. Der Kran kann eine Steuereinheit aufweisen, welche die Nachführung steuert und/oder regelt.

In einer weiteren möglichen Ausführungsform ist vorgesehen, dass die Antriebs- und/oder Energiequelle eine Brennstoffzelle und/oder einen Energiespeicher und/oder einen Verbrennungsmotor umfasst. Im Falle einer Brennstoffzelle umfasst der Kran bevorzugt die geeigneten Schnittstellen für die durch die Brennstoffzelle benötigten Medien.

In einer weiteren möglichen Ausführungsform ist vorgesehen, dass die Antriebs- und/oder Energiequelle eine Windantriebsanlage, insbesondere ein Segel und/oder eine Windfoil und/oder ein Flettnerrohr und/oder ein Windprofil und/oder einen Windflügel, umfasst. Bevorzugt ist eine passive oder aktive Nachführungseinrichtung vorgesehen, wie zuvor beschrieben, um die Windantriebsanlage optimal ausrichten zu können.

Die Antriebs- und/oder Energiequelle kann gleichzeitig mehrere Energiequellen und/oder Antriebsquellen umfassen, beispielsweise eine Windantriebsanlage, eine Windkraftanlage und einen Energiespeicher.

In einer weiteren möglichen Ausführungsform ist vorgesehen, dass die Tragstruktur des Krans ausgelegt ist, die durch die Windantriebsanlage erzeugte Antriebskraft auf das Schiff zu übertragen. Die Tragstruktur dient also nicht nur als Fundament für Hebezeug und Antriebs- und/oder Energiequelle, sondern auch der Übertragung der im Betrieb erzeugten bzw. aufgenommenen Kräfte und Momente.

Generell kann der Kran eine Erfassungseinheit zur Erfassung einer aktuellen Umgebungsgröße, insbesondere einer Windrichtung und/oder -stärke, umfassen. Dadurch lässt sich die Antriebs- und/oder Energiequelle je nach aktuell vorherrschenden Bedingungen wie z.B. Windbedingungen, Sonnenstand, Luftfeuchtigkeit etc. automatisch ausrichten, beispielsweise mittels einer der oben beschriebenen Dreheinheiten.

Die Erfindung betrifft weiterhin ein Schiff oder einen Schwimmkran oder eine schwimmende Plattform, mit einem erfindungsgemäßen Kran. Der Kran ist über dessen Tragstruktur mit dem Schiff verbunden. Hierbei ergeben sich offensichtlich dieselben Eigenschaften, Vorteile und möglichen Ausführungsformen wie für den erfindungsgemäßen Kran, sodass auf eine wiederholende Beschreibung verzichtet wird. Prinzipiell ist es denkbar, dass das Schiff zwei oder mehr erfindungsgemäße Krane aufweist, die jeweils eine eigene Antriebs- und/oder Energiequelle umfassen.

Weitere Merkmale, Einzelheiten und Vorteile der Erfindung ergeben sich aus den nachfolgend anhand der Figuren erläuterten Ausführungsbeispielen. Es zeigen:
- Fig. 1-2:: ein erstes Ausführungsbeispiel des erfindungsgemäßen Krans in einer Schnittansicht von oben und in einer perspektivischen Ansicht;
- Fig. 3-4:: ein zweites Ausführungsbeispiel des erfindungsgemäßen Krans in einer Schnittansicht von oben und in einer perspektivischen Ansicht;
- Fig. 5-6:: ein drittes Ausführungsbeispiel des erfindungsgemäßen Krans in einer Seitenansicht und in einer Schnittansicht von oben;
- Fig. 7-8:: ein viertes Ausführungsbeispiel des erfindungsgemäßen Krans in einer Seitenansicht und in einer Schnittansicht von oben; und
- Fig. 9-10:: ein fünftes Ausführungsbeispiel des erfindungsgemäßen Krans in einer Seitenansicht und in einer Schnittansicht von oben.

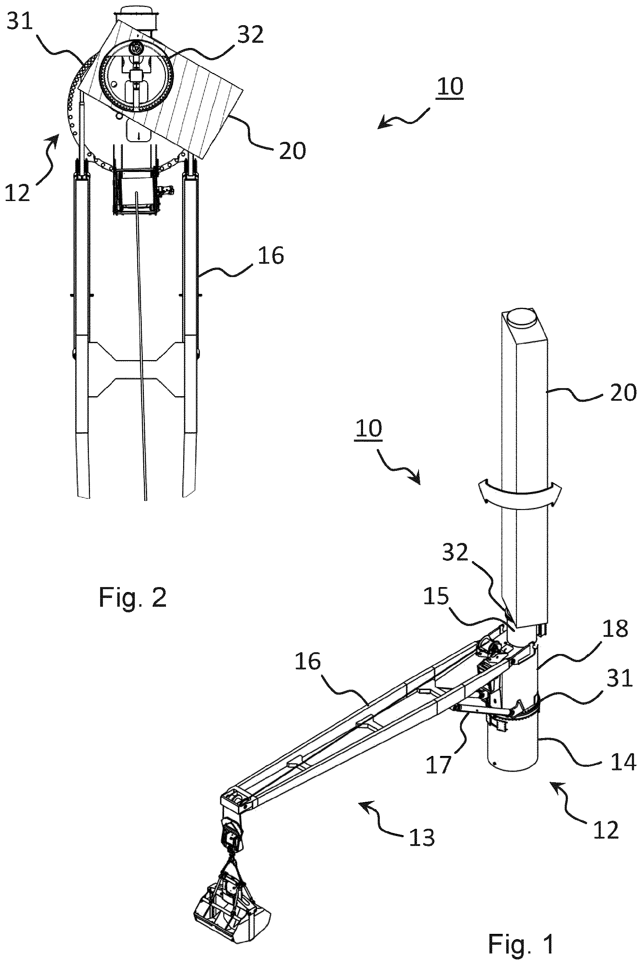

In der Figur 1 ist ein erstes Ausführungsbeispiel des erfindungsgemäßen Krans 10 in einer perspektivischen Ansicht dargestellt. Der Kran 10 ist als Auslegerdrehkran ausgebildet und weist ein Hebezeug 13 sowie eine Tragstruktur 12 mit einer Grundsäule 14 auf, über die der Kran 10 an einem Schiff (nicht dargestellt) verankert ist. Die Grundsäule 14 dient also als Fundament für den Kran 10 bzw. für das Hebezeug 13. Im hier gezeigten Ausführungsbeispiel weist die Grundsäule 14 eine massive, zylindrische Form auf, wobei andere Bauweisen ebenfalls denkbar sind (beispielsweise eine Gittermaststruktur oder eine rechteckige Form der Grundsäule).

Eine erste Dreheinheit 31 mit einem von einem Drehwerk antreibbaren Drehkranz ist an der Oberseite der Grundsäule 14 angeordnet. Ein Trägerstück 18 ist mit der ersten Dreheinheit 31 verbunden und mittels dieser um eine vertikale Drehachse relativ zur Grundsäule 14 und somit zur Verankerung am Schiff drehbar. Das Trägerstück 18 dient als Anlenkstück für einen Ausleger 16, welcher um eine horizontale Achse schwenkbar bzw. auf- und abwippbar am Trägerstück 18 gelagert ist. Das Auf- und Abwippen des Auslegers 16 erfolgt im ersten Ausführungsbeispiel mit Hilfe von zwei Hydraulikzylindern 17. Ein Hubseil ist über Umlenkrollen am Ende des Auslegers 16 geführt und trägt in dem hier gezeigten Ausführungsbeispiel einen Schalengreifer. Selbstverständlich kann stattdessen eine Hakenflasche, ein anderer Greifer oder ein beliebiges anderes Lastaufnahmemittel mit dem Hubseil verbunden sein. Das Hubseil ist insbesondere auf einer am Ausleger 16 montierten Hubseilwinde auf- und abwickelbar gelagert. Der Ausleger 16 lässt sich mit der ersten Dreheinheit 31 um die vertikale Drehachse drehen.

Mit dem Trägerstück 18 ist eine weitere Grundsäule 15 verbunden (sie kann auch einstückig mit dieser ausgebildet sein), wobei die Grundsäule 15 im hier gezeigten Ausführungsbeispiel einen geringeren Durchmesser als die Grundsäule 14 aufweist und relativ zur Drehachse der ersten Dreheinheit 31 nach hinten (d.h. in eine dem Ausleger 16 abgewandte Richtung) versetzt angeordnet ist. Dadurch kann der Ausleger 16 auf- und abgewippt werden, ohne dass es zu einem Kontakt mit der weiteren Grundsäule 15 kommt.

Die Grundsäule 15 trägt eine Antriebs- und/oder Energiequelle 20, welche in dem hier gezeigten Ausführungsbeispiel als Windschubanlage 20 ausgebildet ist, mittels welcher Windkraft in eine Schubkraft umwandelbar und somit eine Vortriebskraft für das Schiff generierbar ist. Die Windschubanlage 20 ist über eine zweite Dreheinheit 32 mit der Grundsäule 15 verbunden und um eine vertikale Drehachse, welche seitlich versetzt zur Drehachse der ersten Dreheinheit 31 angeordnet ist, drehbar. Auch die zweite Dreheinheit 32 umfasst insbesondere einen Drehkranz und ein Drehwerk bzw. einen Drehantrieb.

Die Figur 2 zeigt den Kran 10 der Figur 1 in einer Draufsicht auf einen horizontalen Schnitt durch die Windschubanlage 20, wobei die zweite Dreheinheit 32 ebenfalls eingeblendet ist. Hieraus geht die außermittige bzw. exzentrische Lage der zweiten Dreheinheit 32 deutlich hervor. Die Grundsäule 14 samt erster Dreheinheit 31 dient als Aufnahme und drehbare Lagerung von Hebezeug 13 und Windschubanlage 20, während die Grundsäule 15 samt zweiter Dreheinheit 32 als Aufnahme und drehbare Lagerung der Windschubanlage 20 fungiert.

Über die erste Dreheinheit 31 kann der gesamte Oberbau des Krans 10 inklusive Hebezeug 13 bzw. Ausleger 16 und Windschubanlage 20 gemeinsam gedreht werden. Über die zweite Dreheinheit 32 kann die Windschubanlage 20 unabhängig von der ersten Dreheinheit 31 relativ zum Hebezeug 13 bzw. zum Ausleger 16 gedreht werden, z.B. um die Windschubanlage 20 für die Erzeugung eines maximalen Vortriebs des Schiffs optimal auszurichten. Hierzu kann eine Stelleinheit vorgesehen sein, die für eine aktive oder passive Ausrichtung der Windschubanlage 20 sorgt. Die Ausrichtung kann anhand von Sensordaten erfolgen, welche über einen oder mehrere am Kran 10 angeordnete Sensoren (z.B. Anemometer) aufgenommen und ggf. der Stelleinheit oder einer entsprechenden Steuerung zur Verfügung gestellt werden.

Die Windschubanlage 20 ist daher nicht über ein eigenes Fundament an einem separaten Platz am Schiff angeordnet, sondern in den Kran 10 integriert, sodass die Tragstruktur 12 des Krans 10, insbesondere die Grundsäule 14 mit erster Dreheinheit 31 und Trägerstück 18, gleichzeitig als Fundament bzw. Basis für die Windschubanlage 20 dient. Dadurch wird ein platzsparender Aufbau erreicht, sodass der gewonnene Raum beispielsweise für die Lagerung oder die Anordnung weiterer Schiffskomponenten genutzt werden kann.

Darüber hinaus lassen sich Synergieeffekte in Kombination mit dem kraneigenen Versorgungssystem erreichen. So werden vorzugsweise die benötigten Betriebsmittel für die Windschubanlage 20 wie Hydrauliköl (z.B. für die Drehung der Windschubanlage 20 über die zweite Dreheinheit 32) und Strom über entsprechende Kranschnittstellen zur Verfügung gestellt. Der Kran 10 ist über entsprechende Schnittstellen bereits an Versorgungsleitungen des Schiffs angeschlossen, beispielsweise zur Versorgung mit elektrischer Energie. Die Windschubanlage 20 (bzw. die zweite Dreheinheit 32) sind vorzugsweise über entsprechende Schnittstellen an diese Versorgungsleitungen des Krans 10 angeschlossen. Hierzu weisen die ersten und zweiten Dreheinheiten 31, 32 vorzugsweise entsprechende Drehdurchführungen bzw. Schleifringkörper für elektrische und/oder hydraulische und/oder pneumatische Energie auf.

Alternativ zur gezeigten Ausführungsform können mehrere identische oder unterschiedliche Windschubanlagen 20 mit dem Kran 10 verbunden bzw. in diesen integriert sein, beispielsweise mit jeweils einer eigenen Grundsäule 15 und Dreheinheit 32. Ebenfalls könnte zusätzlich zur oder anstelle der Windschubanlage 20 eine andere Antriebsquelle oder eine insbesondere regenerative Energiequelle vorgesehen sein.

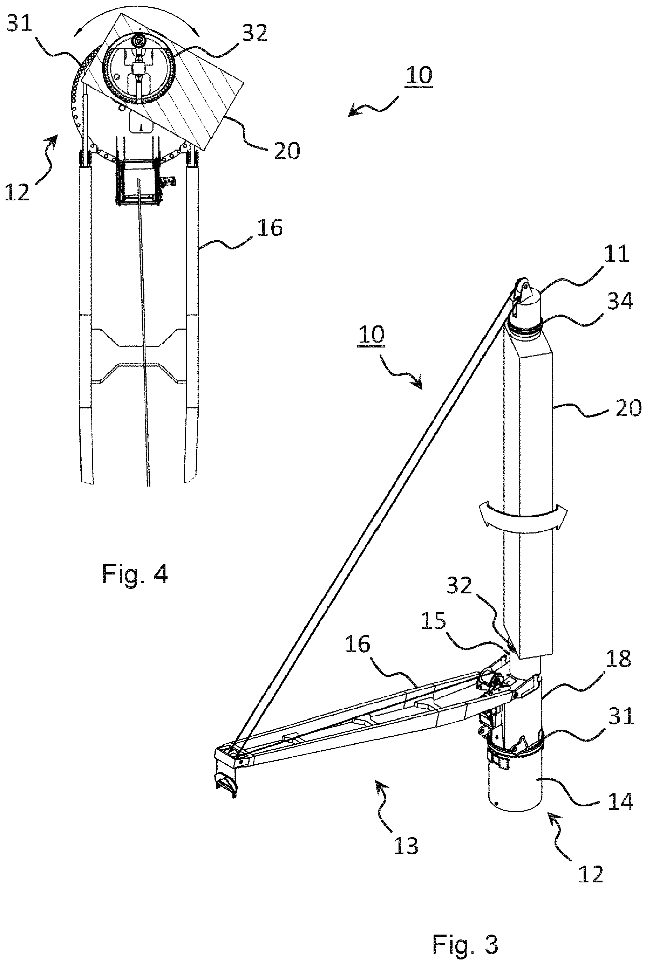

Ein zweites Ausführungsbeispiel des erfindungsgemäßen Krans 10 ist in den Figuren 3 (perspektivische Ansicht) und 4 (Draufsicht auf einen horizontalen Schnitt durch die Windschubanlage 20) gezeigt. Der einzige Unterschied zur Ausführungsform der Figuren 1-2 liegt darin, dass der Ausleger 16 nicht über Hydraulikzylinder 17 wippbar ist, sondern über ein Seilzugsystem. Hierzu kann beispielsweise eine Abspannung mit einem längenverstellbaren Abspannseil zum Einsatz kommen, welches auf einer Abspannseilwinde gelagert sein kann.

Oberhalb der Windschubanlage 20 ist eine Stützsäule 11 angeordnet, welche eine zusätzliche Umlenkrolle trägt, über die das Abspannseil geführt ist. Die Stützsäule 11 ist über eine vierte Dreheinheit 34 mit der Windschubanlage 20 verbunden und relativ zu dieser um eine vertikale Drehachse drehbar. Dadurch kann der Ausleger 16 mitsamt der Umlenkrolle relativ zur Windschubanlage 20 gedreht werden bzw. umgekehrt.

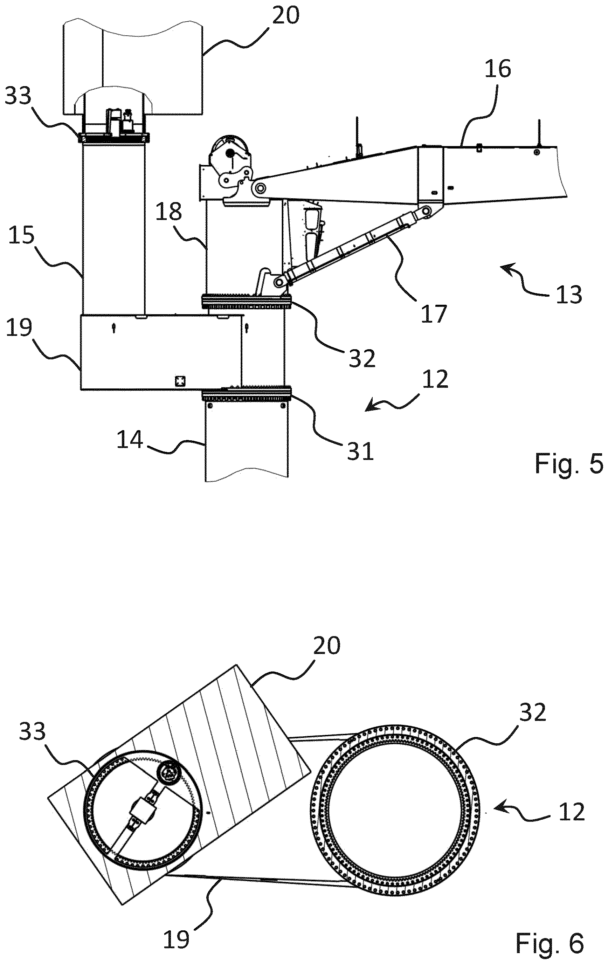

Die Figuren 5 und 6 zeigen ein drittes Ausführungsbeispiel des erfindungsgemäßen Krans 10, wobei die Figur 5 eine Seitenansicht und die Figur 6 eine Draufsicht auf einen horizontalen Schnitt durch die Windschubanlage 20 repräsentieren. Hier ist zwischen Grundsäule 14 und Trägerstück 18 ein weiteres Zwischenstück in Form eines Exzenterarms 19 angeordnet, welcher auf einer Seite von der Grundsäule 14 auskragt und an dessen Ende die Grundsäule 15 für die Windschubanlage 20 trägt. Der Exzenterarm 19 trägt an dessen zentralem Bereich eine zweite Dreheinheit 32, mit der das Trägerstück 18 samt Ausleger 16 verbunden ist. Die Drehachse der zweiten Dreheinheit 32 steht kollinear zur Drehachse der ersten Dreheinheit 31.

In dem hier gezeigten Ausführungsbeispiel ist die Grundsäule 15 für die Windschubanlage 20 starr mit dem Exzenterarm 19 verbunden (wobei dazwischen auch eine weitere Dreheinheit angeordnet sein könnte) und eine dritte Dreheinheit 33 zur Drehung der Windschubanlage 20 relativ zum Exzenterarm 19 und zum Ausleger 16 ist im oberen Bereich der Grundsäule 15 angeordnet.

Der Exzenterarm 19 kann relativ zur Grundsäule 14 über die erste Dreheinheit 31 gedreht werden. Wird dabei die zweite Dreheinheit 32 nicht betätigt, drehen sich Ausleger 16 und Windschubanlage 20 gemeinsam um die durch die erste Dreheinheit 31 vorgegebene vertikale Achse. Wird die zweite Dreheinheit 32 synchron mit der ersten Dreheinheit 31 betätigt, dreht sich der Exzenterarm 19, während der Ausleger 16 in Ruhe bleibt bzw. sich nicht mitdreht. Unabhängig davon kann die Windschubanlage 20 über die dritte Dreheinheit 33 gedreht werden.

Die Drehachse der dritten Dreheinheit 33 ist durch die auskragende Geometrie des Exzenterarms 19 seitlich von den vertikalen Drehachsen der ersten und zweiten Dreheinheiten 31, 32 beabstandet. Dadurch kann die Grundsäule 15 bzw. die Windschubanlage 20 quasi um das Trägerstück 18 herumbewegt werden.

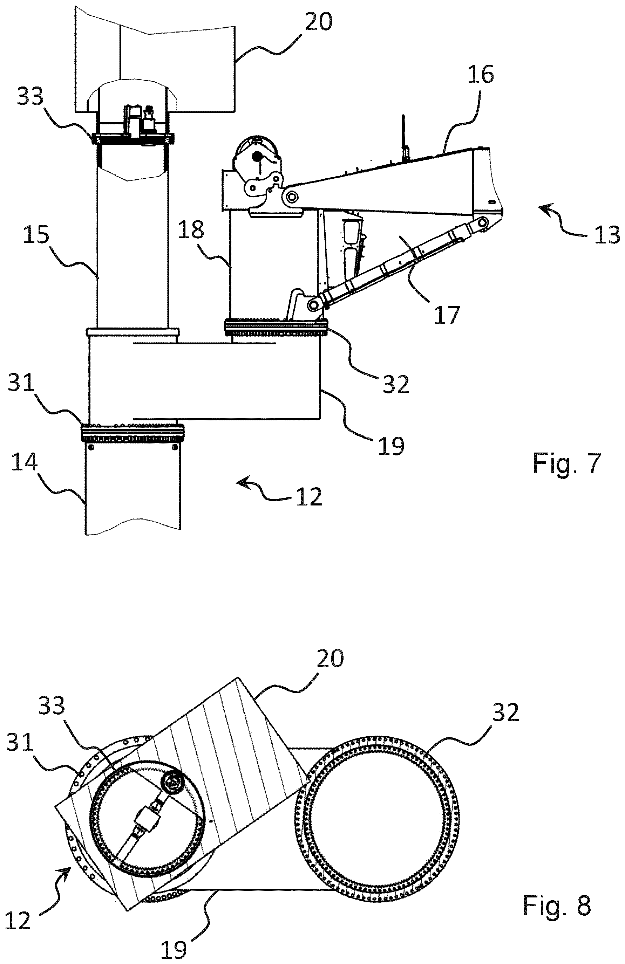

In den Figuren 7 und 8 ist ein viertes Ausführungsbeispiel des erfindungsgemäßen Krans 10 dargestellt. Im Unterschied zum dritten Ausführungsbeispiel der Figuren 5-6 ist hier nicht die Windschubanlage 20, sondern das Trägerstück 18 samt Ausleger 16 an dem einseitig auskragenden Ende des Exzenterarms 19 angeordnet. Auch hier ist das Trägerstück 18 über die zweite Dreheinheit 32 drehbar, wobei nun deren vertikale Achse versetzt zur Drehachse der ersten Dreheinheit 31 angeordnet ist. Die Grundsäule 15 für die Windschubanlage 20 ist in diesem Ausführungsbeispiel starr mit dem zentralen Bereich des Exzenterarms 19 verbunden und trägt wiederum die dritte Dreheinheit 33, mittels welcher sich die Windschubanlage 20 um eine zur Drehachse der ersten Dreheinheit 31 kollinearen Achse drehen lässt. Durch Drehung der ersten Dreheinheit 31 lässt sich nun das Trägerstück 18 mit dem Ausleger 16 um die Grundsäule 15 herumbewegen.

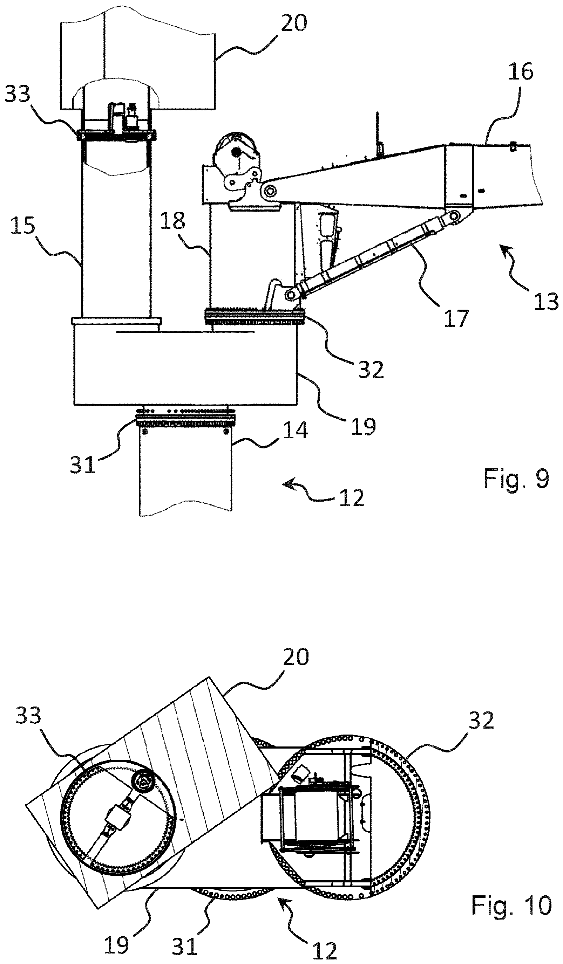

Ein fünftes Ausführungsbeispiel des erfindungsgemäßen Krans 10 ist in den Figuren 9 und 10 gezeigt, wobei hier der Exzenterarm 19 nicht einseitig, sondern beidseitig (genauer gesagt auf gegenüberliegenden Seiten, wobei auch andere Winkel als 180° für die auskragenden Trägerarme des Exzenterarms 19 denkbar sind) von der Grundsäule 14 auskragt. Bei diesem flügelförmigen Exzenterarm 19 sind sowohl das Trägerstück 18 als auch die Grundsäule 15 für die Windschubanlage 20 exzentrisch zur Drehachse der ersten Dreheinheit 31 angeordnet. Ansonsten entspricht die Konfiguration derjenigen des vierten Ausführungsbeispiels, d.h. die Grundsäule 15 ist starr mit einem auskragenden Ende des Exzenterarms 19 verbunden, während das andere auskragende Ende die zweite Dreheinheit 32 für das Trägerstück 18 trägt.

Die Kranstruktur bzw. Tragstruktur 12 ist insbesondere in der Form ausgelegt, dass die aus der Antriebs- und/oder Energiequelle, vorliegend also aus der Windschubanlage 20, erzeugten Kräfte und Momente in das Schiff oder die schwimmende Plattform problemlos übertragen werden können.

### Bezugszeichenliste:

- 10: Kran
- 11: Stützsäule
- 12: Tragstruktur
- 13: Hebezeug
- 14: Grundsäule
- 15: Grundsäule
- 16: Ausleger
- 17: Hydraulikzylinder
- 18: Trägerstück
- 19: Exzenterarm
- 20: Antriebs- und/oder Energiequelle
- 31: Erste Dreheinheit
- 32: Zweite Dreheinheit
- 33: Dritte Dreheinheit
- 34: Vierte Dreheinheit

## Patentansprüche

1. Kran (10) für ein Schiff umfassend eine mit einem Schiff verbindbare Tragstruktur (12), welche ein Hebezeug (13) trägt,
**gekennzeichnet durch**
eine Antriebs- und/oder Energiequelle (20), mittels welcher eine Antriebskraft für das Schiff und/oder Energie zur Versorgung eines Verbrauchers des Schiffes erzeugbar ist und welche derart mit der Tragstruktur (12) verbunden ist, dass mittels des Hebezeugs (13) unabhängig von der Antriebs- und/oder Energiequelle (20) eine Last bewegbar ist.

2. Kran (10) nach Anspruch 1, welcher als Portalkran ausgebildet ist, wobei die Tragstruktur (12) mit dem Schiff verbindbare Schienen sowie ein entlang der Schienen verfahrbares Traggestell mit einer Brücke umfasst, wobei das Hebezeug (13) und die Antriebs- und/oder Energiequelle (20) mit der Brücke verbunden sind.

3. Kran (10) nach Anspruch 2, wobei das Hebezeug (13) eine entlang der Brücke verfahrbare Laufkatze umfasst, welche an einer Unterseite der Brücke angeordnet ist, wobei die Antriebs- und/oder Energiequelle (20) vorzugsweise an einer Oberseite der Brücke angeordnet ist.

4. Kran (10) nach Anspruch 2 oder 3, wobei die Antriebs- und/oder Energiequelle (20) über eine erste Dreheinheit mit der Brücke verbunden und um eine vertikale Drehachse drehbar ist.

5. Kran (10) nach Anspruch 1, welcher als Auslegerdrehkran ausgebildet ist, wobei die Tragstruktur (12) eine mit dem Schiff verbindbare und insbesondere starre Grundsäule (14) und das Hebezeug (13) einen unabhängig von der Antriebs- und/oder Energiequelle (20) bewegbaren Ausleger (16) umfasst, wobei der Ausleger (16) vorzugsweise um eine horizontale Achse schwenkbar gelagert ist.

6. Kran (10) nach Anspruch 5, wobei eine erste Dreheinheit (31) mit der Grundsäule (14) verbunden ist, mittels welcher der Ausleger (16) um eine vertikale Drehachse drehbar ist, wobei die erste Dreheinheit (31) insbesondere ein Drehwerk mit Drehkranz umfasst.

7. Kran (10) nach Anspruch 6, wobei der Ausleger und die Antriebs- und/oder Energiequelle (20) mittels der ersten Dreheinheit (31) gemeinsam um eine vertikale Drehachse drehbar sind, wobei vorzugsweise eine zweite Dreheinheit (32) vorgesehen ist, mittels welcher der Ausleger (16) unabhängig von der Antriebs- und/oder Energiequelle (20) oder die Antriebs- und/oder Energiequelle (20) unabhängig vom Ausleger (16) um eine vertikale Drehachse drehbar ist.

8. Kran (10) nach Anspruch 6 oder 7, wobei ein vorzugsweise über die erste Dreheinheit (31) drehbarer Exzenterarm (19) mit der Grundsäule (14) verbunden ist, welcher den Ausleger (16) und/oder die Antriebs- und/oder Energiequelle (20) trägt, wobei vorzugsweise mindestens eine zweite Dreheinheit (32) zum Drehen des Auslegers (16) oder der Antriebs- und/oder Energiequelle (20) am Exzenterarm (19) angeordnet ist.

9. Kran (10) nach einem der vorhergehenden Ansprüche, ferner umfassend mindestens eine Schnittstelle, an welche eine hydraulische und/oder eine elektrische und/oder eine pneumatische Leitung der Antriebs- und/oder Energiequelle (20) anschließbar oder angeschlossen ist, wobei über die mindestens eine Schnittstelle vorzugsweise hydraulische und/oder elektrische und/oder pneumatische Energie zwischen der Antriebs- und/oder Energiequelle (20) und dem Schiff übertragbar ist.

10. Kran (10) nach einem der vorhergehenden Ansprüche, wobei die Antriebs- und/oder Energiequelle (20) lösbar mit der Tragstruktur (12) verbunden ist, wobei die Tragstruktur (12) und die Antriebs- und/oder Energiequelle (20) jeweils Verbindungsmittel zur Herstellung einer lösbaren Verbindung aufweisen.

11. Kran (10) nach einem der vorhergehenden Ansprüche, wobei die Antriebs- und/oder Energiequelle (20) eine regenerative Energiequelle, insbesondere eine Solaranlage und/oder eine Windkraftanlage, umfasst.

12. Kran (10) nach einem der vorhergehenden Ansprüche, wobei die Antriebs- und/oder Energiequelle (20) eine Brennstoffzelle und/oder einen Energiespeicher und/oder einen Verbrennungsmotor umfasst.

13. Kran (10) nach einem der vorhergehenden Ansprüche, wobei die Antriebs- und/oder Energiequelle (20) eine Windantriebsanlage, insbesondere ein Segel und/oder eine Windfoil und/oder ein Flettnerrohr und/oder ein Windprofil und/oder einen Windflügel, umfasst.

14. Kran (10) nach Anspruch 13, wobei die Tragstruktur (12) ausgelegt ist, die durch die Windantriebsanlage (20) erzeugte Antriebskraft auf das Schiff zu übertragen.

15. Schiff, insbesondere Schwimmkran oder schwimmende Plattform, mit einem Kran (10) nach einem der vorhergehenden Ansprüche, welcher über dessen Tragstruktur (12) mit dem Schiff verbunden ist.
